# EUROPEAN PATENT APPLICATION

(11) **EP 4 697 750 A1**
(43) Date of publication of application: **18.02.2026**
(21) Application number: 24194102.0
(22) Date of filing: 12.08.2024
(51) Int. Cl.: H04R 3/12

(54) **A METHOD AND A SYSTEM FOR PICKING UP A SOUND ORIGINATED OUTSIDE OF A VEHICLE CABIN AND REPRODUCING IT INSIDE THE VEHICLE CABIN THEREBY CREATING IMMERSIVE AUDIO EFFECTS**

(71) Applicant: Harman Becker Automotive Systems GmbH, 76307 Karlsbad (DE)
(72) Inventor: Kalinichenko, Victor, 85640 Putzbrunn (DE)
(74) Representative: Kraus & Lederer PartGmbB

(57) **Abstract**

A method carried out at a processing entity of a vehicle cabin is provided. The method comprises the steps of: receiving, from one or more external microphones of an acoustic system located outside the vehicle cabin, an external acoustic signal associated with an external acoustic sound originating from outside the vehicle cabin; generating a processed acoustic signal based on the external acoustic signal; and causing the processed acoustic signal to be reproduced inside the vehicle cabin by the acoustic system. The method allows for creating immersive audio effects in a vehicle cabin, immersing an occupant of a vehicle into a naturally sounding environment while allowing to have an isolated atmosphere inside the vehicle cabin from an atmosphere of the naturally sounding environment. Furthermore, an acoustic system, a processing entity, and a computer program product for carrying out the steps of the method are provided, as well as their uses.

## Description

### Technical Field

The present application relates to a method and a system for an audio acoustic system of a vehicle.

### Background

Usually, car manufacturers tend to provide good acoustic isolation of vehicles interior from external sounds. This makes the atmosphere inside the vehicle cabin (e.g., car cabin) more comfortable, especially when making phone calls, listening to music, attending the instruction of the navigation, or simply relaxing in an unnoisy environment. Thus, typically, acoustic systems of modern cars are isolated from external sounds. However, in some cases, listening to external sounds may be advantageous, for example, to be able to listen to the approaching car hidden by the obstacles on the nearby road; or to listen to the noise of the seashore, or a waterfall; or to listen to the city noises. In such cases, vehicle occupants tend to open the windows of the vehicle to be able to listen to external sounds, which may in some cases be hardly possible due to bad weather conditions (e.g. windy, rainy, too hot or too cold) and, thus, may negatively impact climate control.

### Summary

In view of the above, there is a need to provide a method and a system for picking up a sound originated outside of a vehicle cabin and reproducing it inside the vehicle cabin while keeping the windows of the vehicle closed.

These needs are met by the features defined in the independent claims. The dependent claims define additional embodiments.

A method is provided. The method is carried out at a processing entity of a vehicle cabin. The method comprises receiving from one or more external microphones of an acoustic system located outside the vehicle cabin, an external acoustic signal associated with an external acoustic sound originating from outside the vehicle cabin. The method further comprises generating a processed acoustic signal based on the external acoustic signal. The method further comprises causing the processed acoustic signal to be reproduced inside the vehicle cabin by the acoustic system.

A processing entity is provided. The processing entity comprises at least one computer processor configured to carry out steps of a method. The method comprises receiving from one or more external microphones of an acoustic system located outside the vehicle cabin, an external acoustic signal associated with an external acoustic sound originating from outside the vehicle cabin. The method further comprises generating a processed acoustic signal based on the external acoustic signal. The method further comprises causing the processed acoustic signal to be reproduced inside the vehicle cabin by the acoustic system.

A computer program product is provided. The computer program product comprises computer readable instructions, stored on an electronic storage medium, that, when executed on a processing entity, cause the processing entity to carry out steps of a method. The method comprises receiving from one or more external microphones of an acoustic system located outside the vehicle cabin, an external acoustic signal associated with an external acoustic sound originating from outside the vehicle cabin. The method further comprises generating a processed acoustic signal based on the external acoustic signal. The method further comprises causing the processed acoustic signal to be reproduced inside the vehicle cabin by the acoustic system.

An acoustic system for a vehicle is provided. The acoustic system comprises one or more external microphones and one or more loudspeakers controlled by a processing entity. The processing entity comprises at least one computer processor configured to carry out steps of a method. The method comprises receiving from one or more external microphones of an acoustic system located outside the vehicle cabin, an external acoustic signal associated with an external acoustic sound originating from outside the vehicle cabin. The method further comprises generating a processed acoustic signal based on the external acoustic signal. The method further comprises causing the processed acoustic signal to be reproduced inside the vehicle cabin by the acoustic system.

A vehicle comprising an acoustic system is provided. The acoustic system comprises one or more external microphones and one or more loudspeakers controlled by a processing entity. The processing entity comprises at least one computer processor configured to carry out steps of a method. The method comprises receiving from one or more external microphones of an acoustic system located outside the vehicle cabin, an external acoustic signal associated with an external acoustic sound originating from outside the vehicle cabin. The method further comprises generating a processed acoustic signal based on the external acoustic signal. The method further comprises causing the processed acoustic signal to be reproduced inside the vehicle cabin by the acoustic system.

A use of the method, the processing entity, the computer program product and the acoustic system is provided. The use allows for creating immersive audio effects in a vehicle cabin, immersing an occupant of a vehicle into a naturally sounding environment while allowing to have an isolated atmosphere inside the vehicle cabin from an atmosphere of the naturally sounding environment. This and further advantages will become more apparent from the detailed description and the accompanying drawings.

The features set out above and those described below may be used not only in the corresponding combinations explicitly set out, but also in other combinations or in isolation, without departing from the scope of protection of the present disclosure.

### Brief description of the Drawings

The present disclosure will now be described more fully hereinafter with reference to the accompanying drawings, in which embodiments of the disclosure are shown. However, this disclosure should not be construed being limited to the embodiments set forth herein. Rather, these embodiments are provided so that this disclosure will be thorough and complete, and will fully convey the scope of the disclosure to those skilled in the art. Like numbers refer to like elements throughout.
FIG. 1 schematically shows an acoustic system 100 according to one of a number of embodiments.
FIG. 2 schematically shows an acoustic system 200 according to one of a number of embodiments.
FIG. 3 schematically shows a method 300 according to one of a number of embodiments.
FIG. 4 schematically shows a processing entity 1000 according to one of a number of embodiments.

### Detailed description

The properties, features and advantages described above and the way in which they are achieved will become clearer and more clearly understood in association with the following description of the exemplary embodiments which are explained in greater detail in connection with the drawings. For simplicity and illustrative purposes, the present disclosure is described by referring mainly to an exemplary embodiment thereof. In the following description, numerous specific details are set forth in order to provide a thorough understanding of the present disclosure. However, it will be readily apparent to one of ordinary skill in the art that the present disclosure may be practiced without limitation to these specific details. In this description, well-known methods and structures have not been described in detail so as not to unnecessarily obscure the present disclosure.

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical or electronic devices may be combined with each other and/or separated in any manner based on the particular type of electrical implementation that is desired. It is recognized that any circuit or other electrical or electronic device (e.g., an acoustic system) disclosed herein may include any number of microcontrollers, a central processor unit (CPU), integrated circuits, memory devices and software which co-act with one another to perform operation(s) disclosed herein. In addition, any one or more of the electrical or electronic devices may be configured to execute a program code (for an infotainment system) that is embodied in a non-transitory computer readable medium programmed to perform any number of the functions as disclosed.

In the following, embodiments of the disclosure will be described in detail with reference to the accompanying drawings. It is to be understood that the following description of embodiments is not to be taken in a limiting sense. The scope of the disclosure is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

The term "vehicle" in the context of the current disclosure may be understood as any vehicle having a vehicle cabin, such as a car, including truck, tug, driven and controlled by a human, warehouse machines, construction machines etc. Usually, car manufacturers tend to provide good acoustic isolation of the car interior from external sounds. This makes the car cabin atmosphere more comfortable, especially when making phone calls, listening to music, attending the instruction of the navigation, or simply relaxing in an unnoisy environment. However, in some cases, users or in other words occupants of the car, want to eliminate obstacles for external sounds. For example, when the car drives out onto the busy street, where the visual observation of the street is closed by some obstacles, such as parked cars, trees, billboards etc. These conditions may create a danger of collision with an approaching car. To overcome lack of visibility, frequently, drivers of cars, before driving out onto a street, open car windows to be able to hear the noises of approaching cars. Sometimes this approach may be uncomfortable for the driver or passengers of the car because of outside conditions: precipitation, heat or cold, strong wind, insects, or bad smells.

Another reason for opening the windows could be the user's (car occupants, driver) wish to listen to the surrounding sounds. It can be, for example, sounds of the city, sounds of the ocean waves, sounds of river, sounds of jungles, sounds of the festival nearby and other sounds, which user may want to be open to.

As mentioned above, it is not always pleasant or efficient in terms of climate control of the vehicle to open windows. Thus, a need exists to address the above problems and provide the above immersion to the surrounding sound atmosphere. This need is met by receiving external acoustic signal from one or more external microphones. Moreover, external microphones being used in a microphone matrix can give the opportunity to listen sounds from specific directions. For example, when driving in a canyon with the river on the right and rocks on the left side, a user may be able to listen to the sounds of the river from the right side while masking unpleasant noisy reflections from the rocks coming from the left, which contain echoes of the river and echoes of the car. In some examples, the external sounds received by the external microphones and transmitted to the processing entity can be mixed by the processing entity with certain weights (e.g., according to a mixing ration) with an audio signal (e.g. with a music signal), which at that moment may be played back in the car, thus creating a pleasant atmosphere in the cabin, or another words, creating an additional audio effect of mixed audio/acoustic signals. These and further advantages will become more apparent from the following detailed description and the accompanying drawings.

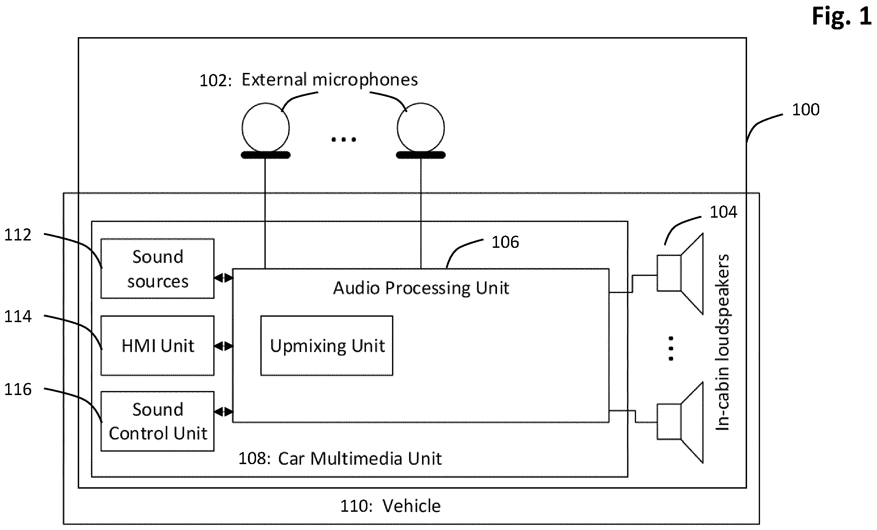

FIG. 1 schematically shows the acoustic system 100 according to one of a number of embodiments.

The acoustic system 100 for a vehicle 110 comprises one or more external microphones 102. Acoustic system 100 may further comprise one or more loudspeakers 104. The one or more external microphones 102 and the one or more loudspeakers 104 of the acoustic system 100 are controlled by a processing entity 106. In some examples, the processing entity 106 may be a part of a car multimedia unit 108.

In some examples, the one or more external microphones 102 may only comprise one external microphone. For example, one omnidirectional external microphone can be located, for example, on the roof of the vehicle in order to cover all incoming directions of the external sound. This would be the simplest configuration allowing to detect and process the external sound and to reproduce the processed signal (or a safety notification based on it) inside the vehicle. However, for determining the incoming directions of the external sound more precisely, the one or more external microphones 102 comprising more than one microphone may be advantageous, especially a microphone matrix or an array, and even more preferably, locating said matrixes or arrays at different sides of the vehicle.

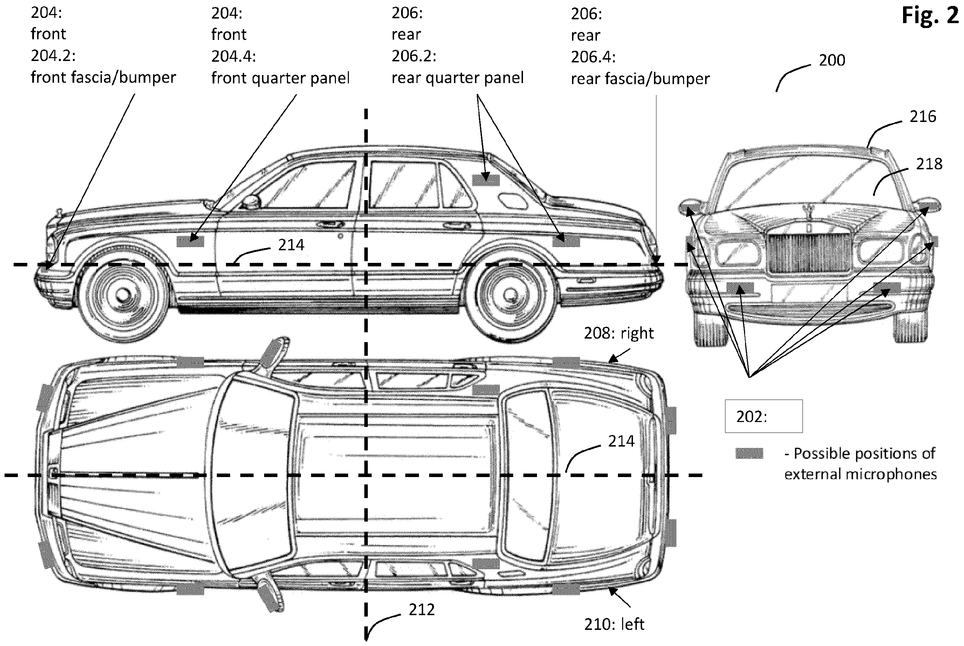

One aspect of the present disclosure relates to a method carried out at the processing entity 106 of a vehicle cabin 218. The vehicle cabin 218 is further described in the context of FIG. 2. The method receives, from the one or more external microphones 102 of the acoustic system 100 located outside the vehicle cabin 218, an external acoustic signal associated with an external acoustic sound originating from outside the vehicle cabin. The method generates a processed acoustic signal based on the external acoustic signal, and causes the processed acoustic signal to be reproduced inside the vehicle cabin by the acoustic system (i.e., by at least one loudspeaker 104 of the acoustic system).

In some examples, processed acoustic signal may be referred to as a digital audio signal derived by means of at least Analog to Digital Converter (ADC) from the analogue electric input audio signal.

In some examples, causing the processed acoustic signal to be reproduced inside the vehicle cabin by the acoustic system may be implemented by means of transforming it to the output analogue electric audio signal by means of at least one Digital to Analog Converter (DAC) followed by transforming it into acoustic waves by means of at least one loudspeaker located in the cabin of the vehicle. Thus, the processed digital audio signal may be reproduced inside the vehicle cabin. Thus, in an implementation, the method comprises receiving from at least one external microphone (located outside the vehicle cabin) of an acoustic system an external acoustic signal associated with an external acoustic sound originating from outside the vehicle cabin and transforming the received external acoustic signal into an analogue (continuous) electric input audio signal. The method may further comprise generating a processed digital audio signal derived by means of at least Analog to Digital Converter (ADC) from the analogue electric input audio signal. The method may further comprises causing the processed digital audio signal to be reproduced inside the vehicle cabin by the acoustic system by means of transforming it to the output analogue electric audio signal by means of at least one Digital to Analog Converter (DAC) followed by transforming it into acoustic waves by means of at least one loudspeaker located in the cabin of the vehicle.

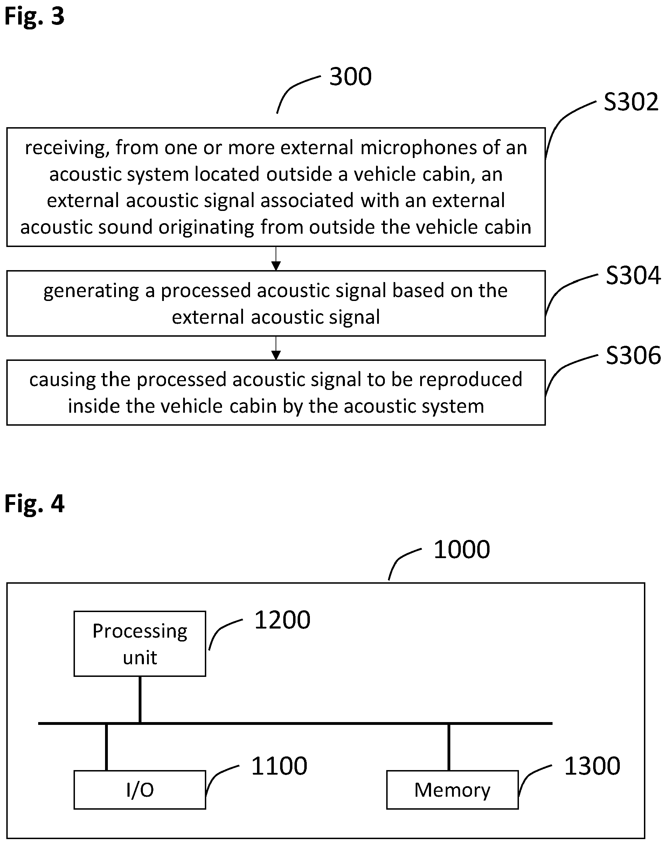

A processing entity 106 may be understood as a computing device having a processing unit such as the processing unit 1200 further described in the context of FIG. 4. This processing unit is capable of executing software instructions to manipulate audio signals. An acoustic system 100 may be understood as a collection of microphones (i.e., one or one or more external microphones 102) and loudspeakers (i.e., one or multiple loudspeakers 104) designed to capture and reproduce sound waves. External microphones 102 may be mounted on the exterior of the vehicle to capture sounds from the surrounding environment.

An effect may be that the safety of driving is improved when it is necessary to listen to the sounds produced by possibly approaching cars, which can be obscured by obstacles such as billboards, trees or parked vehicles. This eliminates the need to open windows, which can be problematic in case of bad weather conditions, bad smells from the outside, dust, etc. Additionally, a new immersion audio effect is created, letting car occupants be part of the environment, such as sounds of city or nature, even at bad weather conditions.

In some examples, sound sources 112, a human machine interaction, HMI, unit 114, and a sound control unit 116 may be communicatively coupled to the processing entity 106.

In some examples, the processing entity 106 may comprise an audio processing unit. The audio processing unit may comprise an up-mixing unit (or simply "mixing unit") configured to mix various audio/acoustic signals (e.g. external acoustic signal with another acoustic signal, e.g., an audio signal generated from an audio source).

According to the aspect, processing entity 106 generates the processed acoustic signal based on the external acoustic signal. In some examples, the processed acoustic signal may comprise a mixture of the external acoustic signal with an audio signal generated from an audio source and played back by the acoustic system (i.e., loudspeakers of the acoustic system) in the vehicle cabin. For example, the audio source for the audio signal may be a radio, connected portable gadgets (e.g. phone, smartphone, tablet PC, etc), CD- or MP3-players, Bluetooth audio devices, USB-stick- and SD-card readers, and other external and internal (i.e. integrated to the in-vehicle acoustic system) devices and sources. Thus, in some examples, generating the processed acoustic signal based on the external acoustic signal may be understood as mixing the external acoustic signal with the audio signal generated from the audio source which may be a radio, phone, CD, MP3, Bluetooth audio, USB-stick, and other sources. Additionally, or alternatively, generating the processed acoustic signal based on the external acoustic signal may involve other kinds of processing of the external acoustic signal such as spatial or immersive audio processing, automated adjustment of the level or intensity of the external sounds etc.

In some examples, generating the processed acoustic signal based on the external acoustic signal may be understood as receiving raw external acoustic signal from the one or more external microphones and reproducing the raw external acoustic signal as received, i.e., without any manipulations with it.

In some examples, the received external acoustic signal may be transformed into analogue (continuous) electric input audio signal.

Thus, in some examples, the sound sources 112 in FIG. 1 may be a radio, phone, CD, MP3, Bluetooth audio, USB-stick, and alike sources, that may be mixed with the external acoustic signal from the external microphones 102 by the processing entity 106.

In some examples, generating the processed signal may comprise changing a mixing ratio of the audio signal and the external acoustic signal mixed in the processed acoustic signal. The mixing ration may be in a range 0-100%. When the mixing ratio is 100%, generating the processed signal may be understood as stopping an output of the audio signal (that may be referred to as a main signal, e.g., music, personal assistant, mobile phone), and replacing the audio signal by the processed acoustic signal. When the mixing ratio is 0% generating the processed signal may be understood as stopping the mixing and (temporarily) replacing the external acoustic signal by the audio signal in the processed acoustic signal. When the mixing ratio is above 0% and less than 100%, generating the processed signal may be understood as reproducing the external acoustic signal and the audio signal jointly with a weight of each signal according to the mixing ratio.

For example, the mixing ratio may be 25% meaning that the weight of the external acoustic signal is 0.25 and the weight of the audio signal in the mixed (processed) acoustic signal is 0.75. In another example, the mixing ratio may be 50% meaning that the weight of the external acoustic signal is 0.50 and the weight of the audio signal in the mixed (processed) acoustic signal is 0.50. In another example, the mixing ratio may be 75% meaning that the weight of the external acoustic signal is 0.75 and the weight of the audio signal in the mixed (processed) acoustic signal is 0.25. In one advantageous implementation the weight of the external acoustic signal in the mixed (processed) acoustic signal may be between 0.25 and 0.75 allowing for the occupants of the vehicle listening to the external acoustic sound reproduced from the external acoustic signal, while also listening to the audio signal, without the external acoustic sound outpowering the audio signal. The advantageous range of the weights 0.25 and 0.75 of the external acoustic signal in the mixed (processed) acoustic signal may also be combined with an option to stop mixing (i.e., having the weight equal to zero combined with the range 0.25-0.75). In this case, car occupants may be offered the option to mix the signals in the range 0.25-0.75 and stop mixing. For the acoustic systems with multiple loudspeakers weighting in the above sense may be applicable individually to each pair of "loudspeaker (output) channel - external microphone (input) channel", i.e. each pair "loudspeaker channel - external microphone channel" may have its own mixing weight. For example, all woofer loudspeaker channels may have mixing weights 0.25, while all midrange loudspeaker channels may have weights 0.4 and for all tweeter loudspeaker channels the weight may be 0.3. Mixing weights may also vary in time depending on various factors (e.g. internal or external conditions, events), for example, depending on the instantaneous power of the audio signal to be played back and the instantaneous power of the received external signals received by the external microphones; depending on the number of car occupants, positions of the occupied seats; depending on the level of in-cabin noise (e.g. intensity of passenger voices inside the vehicle cabin), etc.

In some examples the range of 0-100% for the mixing ratio (or weight of 0-1.0), or mixing ratio of 25-75% (or weight of 0.25-0.75) may be applied to a first plurality of audio channels producing a first audio signal or signals, while a second plurality of audio channels producing a second audio signal may be excluded from mixing. For example, when a phone rings, a radio channel may switch to the phone channel and the external acoustic signal may be stopped for taking the phone call, and afterwards, the audio channel may switch back to the radio, which may continue to play together with the external acoustic signal on the background of the radio. For example, the external acoustic signal may have a volume at 25-75% level of the volume of the radio signal, that would correspond to 0.25-0.75 weight of the external acoustic signal in the mixed (processed) acoustic signal (and also would correspond to the mixing ratio of 25-75%).

In some examples, generating the processed signal may comprise determining a user input of a user of the acoustic system by which it is determined how the external acoustic sound should be processed and generating the processed acoustic signal based on the user input. For example, the user input may be received via the human machine interaction, HMI, unit 114 or an alike computer interface, such as the input/output interface 1100 further described in the context of FIG. 4.

In some examples, determining the user input may include any one of: determining one or more playback directions; determining one or more mixing conditions to mix the audio signal with the external acoustic signal or to stop mixing; and/or determining a deactivation criterion for deactivating directional reproduction of the processed acoustic signal resulting in omnidirectional reproduction.

"Playback direction" may be understood as the direction from which the processed acoustic signal is reproduced in the vehicle cabin. For example, some of the loudspeakers 104 may be placed at the back of the vehicle cabin and some at the front. A front playback direction may be understood such that the sound is played back from the front of the vehicle cabin, i.e., by the loudspeakers 104 placed at the front. Similar may be understood for the back, left and right playback directions and the back, left and right loudspeakers 104. An omnidirectional playback direction may be understood such that all loudspeakers 104 (placed at the front and at the back) reproduce (play back) the processed acoustic signal (from all directions).

In some examples, generating the processed acoustic signal may simply refer to determining an output condition for the reproduction of the processed acoustic signal inside the vehicle cabin. Thus, the processed acoustic signal may be reproduced based on the output condition. The output condition may be a plurality of output conditions. In some examples, an output condition may simply be reproducing a raw external acoustic signal.

In additional or alternative examples, an output condition may refer to reproducing an external acoustic signal from a one or more playback directions. As mentioned above, "playback direction" may be understood as the direction from which the processed acoustic signal is reproduced in the vehicle cabin. Thus, the one or more playback directions may determine from which direction the processed signal is caused to be reproduced in the vehicle cabin.

In some further examples, generating the processed acoustic signal may comprise determining an incoming direction indicating from which direction the external acoustic signal comes relative to the vehicle cabin. "Relative to the vehicle cabin" may be interpreted as relative to a longitudinal axis 214 of the vehicle itself, that may correspond to a longitudinal axis 214 of the vehicle cabin, as illustrated in FIG. 2. "Relative to the vehicle cabin" may also be interpreted as relative to a transverse axis 212 of the vehicle (vehicle cabin), as illustrated in FIG. 2. For example, left and right directions may be determined relative to the the longitudinal axis 214; and front and back directions may be determined relative to the transverse axis 212.

The "incoming direction" may be understood as the direction from which the external acoustic signal originates relative to the vehicle cabin, or more specifically, relative to a longitudinal and/or transverse axis of the vehicle. As will be described in the context of FIG. 2, the incoming direction "from the front" and "from the rear or the back" may be determined relative to the transverse axis 212 dividing the vehicle into two halves, from the front 204 to the rear 206. The incoming direction "from the right" and "from the left" may be determined relative to the longitudinal axis 214 dividing the vehicle into two halves, from the left side 210 to the right side 208. In case of using microphone arrays of external microphones (i.e. several closely located microphones on the same line (e.g. 0.5-3 centimeters from each other), thus, building the "array"), or in case of using microphone matrixes (i.e. several closely located microphones on the planar surface, thus, forming the "matrix") special signal processing methods based on manipulations on the phases of the received signals from each microphone of the microphone array can be applied to create directivity of the microphone array, thus, filtering out signals which are coming from the non-desired directions. These methods (which are known in the signal processing theory and are well described in the literature) allow selection of the arbitrary (i.e. continuous) spatial direction of receiving the signal (e.g. from the direction +72 degrees from the longitudinal axis).

In some further examples, generating the processed acoustic signal may comprise generating a directed acoustic signal, from a first playback direction that is the same as the determined (incoming) direction, which when output by the acoustic system gives an impression as coming from the incoming direction. For example, the external acoustic signal originating from the front (having an incoming direction "from the front") would be played back from the front playback direction (by the loudspeakers placed at the front of the vehicle cabin).

In some further examples, generating the processed acoustic signal may comprise generating a directed acoustic signal, from a first playback direction that is the same as the determined direction, which when output by the acoustic system gives an impression as coming from the incoming direction, with keeping the direction of the reproduced external sounds by the in-vehicle loudspeakers dependent on the geographical orientation of the car on the surface, thus creating an effect that the external sound is reproduced in the cabin of the car from the same geographical direction it is originated from regardless, which orientation on the surface the car has at each moment. For example, geographic orientation may be relative to the north, south, east, west. For example, a geographical direction may be defined by an angle formed with an axis of the north, south, east, west.

In some further examples, generating the processed acoustic signal may comprise generating a directed acoustic signal from a second playback direction that is different to the determined direction, wherein the second playback direction may be any one of: an opposite direction to the incoming direction to give an impression of mirroring the external acoustic sound, a front playback direction to give an impression of a stage effect or a rear playback direction with respect to the vehicle cabin.

In some further examples, multiple external acoustic signals may be available. For example, some of the external microphones 102 may be placed on the left side 210 of the vehicle and some on the right side 208. Thus, one external acoustic signal may come from the left and another one from the right. In this case, generating the processed acoustic signal may comprise determining multiple incoming directions (e.g., from the left and from the right), each indicating from which direction one of the multiple external acoustic signals comes relative to the vehicle cabin. In this example, the output condition may comprise one or more playback directions (e.g., left, right, front, and back playback directions). For example, the external acoustic signal coming from the left and from the right may be played back from the front and/or from the back playback directions. In another example, the external acoustic signal coming from the left and from the right may be played back from the front, back, left and right resulting in an omnidirectional reproduction by all speakers from all directions. In another example, the external acoustic signal coming from the left may be played back from the same direction as the incoming direction (i.e., the left playback direction), and the external acoustic signal coming from the right may be played from the same direction as the incoming direction (i.e., the right playback direction), keeping the incoming direction as the playback direction. In another example, the external acoustic signal coming from the left may be played from the opposite playback direction (the right playback direction) and the external acoustic signal coming from the right may be played from the opposite playback direction (the left playback direction), mirroring the incoming and the playback directions. Thus, the processing entity may cause each of the multiple external acoustic signals to be reproduced from a front playback direction or a rear playback direction with respect to the vehicle cabin (or more specifically, with respect to the longitudinal axis of the vehicle). Alternatively, the processing entity may cause causing the multiple external acoustic signals to be reproduced omnidirectionally by multiple loudspeakers of the acoustic system. Yet in another alternative example, the processing entity may cause the multiple external acoustic signals to be reproduced from multiple playback directions comprising a front or a rear playback direction allowing to keep or mirror front and rear incoming directions, and a side playback direction allowing to mirror the incoming direction.

Each of the above arrangements may create different immersion effects for vehicle occupants allowing them to feel part of their environment even at bad weather conditions. Reproducing the external acoustic signal or signals from said playback directions (mirroring, omnidirectional reproduction, and keeping the direction) may add various audio effects to the overall immersion effect.

In some examples, processing entity 106 may cause the external acoustic signal alone or together with the audio signal to be reproduced by multiple loudspeakers 104 of acoustic system 100.

In some additional or alternative examples, generating the processed acoustic signal based on the external acoustic signal comprises adding one or more surround effects comprising reverberations, e.g., originated from the received external sound, wherein the reverberations may comprise natural (e.g. based on recorded impulse responses of the real rooms or concert halls), or artificially generated reverberations.

In some additional or alternative examples, generating the processed acoustic signal based on the external acoustic signal may comprise providing a gain value for the external acoustic signal thereby controlling the volume of the reproduced acoustic signal.

In some additional or alternative examples, generating the processed acoustic signal based on the external acoustic signal may comprise controlling the bass function of the external acoustic signal by setting amplification or attenuation of the low-frequency components of the external acoustic signal.

In some additional or alternative examples, generating the processed acoustic signal based on the external acoustic signal may comprise controlling the midrange function of the external acoustic signal by setting amplification or attenuation of the middle-frequency components of the external acoustic signal.

In some additional or alternative examples, generating the processed acoustic signal based on the external acoustic signal may comprise controlling the treble function of the external acoustic signal by setting amplification or attenuation of the low-frequency components of the external acoustic signal.

In some additional or alternative examples, generating the processed acoustic signal based on the external acoustic signal may comprise automatically adjusting a sound pressure level of the external acoustic signal to be reproduced, e.g., based on a distance to a source of the external acoustic sound or based on a level of internal noise inside the vehicle cabin.

In some additional or alternative examples, generating the processed acoustic signal based on the external acoustic signal may comprise determining and tracking an incoming direction of a selected external acoustic signal, e.g., selected from a plurality of received external acoustic signals, wherein the incoming direction may be relative to a longitudinal axis of the vehicle, and wherein the tracking may allow for filtering out the remaining external acoustic signals of the plurality of the external acoustic signals, wherein the remaining external acoustic signals may come from incoming directions that are different to the incoming direction of the selected external acoustic signal. The selected signal may be a desired, preferred or a signal of interest (e.g., a characteristic signal of an approaching motor-based vehicle). Tracking the direction of the signal of interest (desired or preferred signal) in respect to the longitudinal axis of the vehicle (which may be moving and thus changing its orientation relative to the ground) may allow for filtering out the sounds received to the matrix of microphones from the other (non-desired) directions. The non-desired signal may be understood as a signal that is not relevant to track; e.g., a signal that introduces noise and does not relate to safety risks, e.g., approaching cars; or a signal that comes from echoes of the main signal, e.g., sound of a river, own motor and wheels noises and the correspondent echoes, etc. While the desired, preferred or signal of interest may be understood as a signal that is relevant to track, e.g., a signal that is associated with a safety risk e.g., approaching cars, a signal that is associated with the naturally sounding environment, e.g., a river. The signal that is relevant or not relevant to track may be determined based on a signal characteristic, e.g., spectral components.

The sound of approaching cars may be intermingled with the sound of the naturally sounding environment, e.g., a river, as well as other, undesired sounds, e.g., noises from the wind, echoes, etc. Each sound may be distinguished by one or more characteristics of the external acoustic signal received from the external microphones (e.g., characteristic spectral components; analyzing signal intensities at discrete time steps, applying machine learning).

Immersion audio effects (immersing occupants of the vehicle into the naturally sounding environment) may be combined with receiving a safety notification notifying the driver about a risk of approaching vehicles. The immersion effects may interrupt while the safety notification is played back by the acoustic system. Additionally or alternatively, the safety notification may be an electronic notification (e.g., a message on a display or control data for controlling the vehicle).

In some examples, the external acoustic signal from the one or more external microphones may be received at discrete sequential time periods for determining at least one of: the distance to an approaching vehicle and the speed of the approaching vehicle. In this example, it may be possible to determine the approaching vehicle from one or more sound components of the processed acoustic signal, sound intensity from the processed acoustic signal at the discrete sequential time periods, the distance and/or the speed. Thus, it may be possible to determine a safety risk of approaching vehicles producing, at least in part, the external acoustic signal, and generating a notification of the safety risk (or in other terms, safety notification). For example, combustion or electric motor-based vehicle may produce a characteristic audible sound of a motor distinguishable from the other components of the external acoustic signal. Other vehicles may also produce audible sounds having characteristics allowing to distinguish them from other components of the external acoustic signal. Thus, the characteristic audible sound may refer to the relevant or desired signal to be tracked, while other non-desired signals may be filtered out.

Approaching vehicles may be false approaching, i.e., moving away. In this case, alternative terminology may be used such that the approaching vehicles simply refer to vehicles producing noise that forms a part of the external acoustic signal. Thus, in alternative formulation, the method would comprise receiving the external acoustic signal from the one or more external microphones at discrete sequential time periods for determining at least one of: the distance to a vehicle producing the noise (approaching or departing vehicle) and the speed of the vehicle producing the noise, including the sign of the speed value, i.e., the fact whether the vehicle is approaching or moving away. Thus, approaching vehicle can be distinguished from the departing vehicle by the speed sign. The external acoustic signal may also comprise parts of signal generated by an approaching and parts generated by departing vehicles. Those vehicles can be distinguished from the departing vehicle by the speed sign, which may be determined from the time series (i.e., the external acoustic signal received at the discrete sequential time periods).

In some examples, the notification may comprise a safety warning signal to be reproduced by the acoustic system 100. The safety warning signal may be another audio sound reproduced (played back) by acoustic system 100. In further examples, the notification may have other forms, for examples, a warning message displayed at a display of the vehicle. The display of the vehicle may be a part of an infotainment system of the vehicle also assisting a driver in the driving environment. Thus, the acoustic system 100 may be integrated with another system of the vehicle, e.g., the infotainment system.

The acoustic system 100 may be implemented in a vehicle, as for example, described in the context of FIG. 2. Thus, the features of the acoustic system 100 in FIG. 1 are interchangeable and/or may be combined with the features of the acoustic system 200, which is further described in the context of FIG. 2.

The acoustic system 100; 200 may also be referred to as an audio acoustic system. An audio system typically refers to the hardware (e.g., loudspeakers) that produces and plays back the sound, while an acoustic system may encompass both the audio system and the vehicle's characteristics that affect sound quality and behaviour within the vehicle cabin.

FIG. 2 schematically shows the acoustic system 200 according to one of a number of embodiments.

Although not shown in FIG. 2, the acoustic system 200 comprises one or more external microphones such as the ones illustrated in FIG. 1: one or more external microphones 102. Although not shown in FIG. 2, the acoustic system 200 further comprises one or more loudspeakers, such as the ones illustrated in FIG. 1: loudspeakers 104. The microphones and the loudspeakers are controlled by a processing entity (which is not shown in FIG. 2 but is shown in FIGs. 1 and 4: processing entity 106; processing entity 1000).

In some examples, the one or more external microphones may be located at one or more external sides of the vehicle. The one or more external sides of the vehicle may comprise any one of: a vehicle front side 204, a vehicle rear side 206, a vehicle left side 210, a vehicle right side 208, and/or a vehicle roof-top side.

In some examples, the one or more external microphones may be located at one or more vehicle parts comprising any one of: a vehicle front 204.2 and/or back fascia 206.4, a vehicle front 204.2 and/or rear bumper 206.4, one or more vehicle mirrors, one or more vehicle quarter panels 204.4, 206.2 comprising any one of a front-left panel, a front-right panel, a rear-left panel and/or a rear-right panel, and/or a vehicle roof.

As may be understood from the above, possible positions 202 of the external microphones can include one or more positions at a front side 204; at a rear side 206; at a right side 208 and at a left side 210 of a vehicle 216. A front fascia/bumper 204.2 of the vehicle 216 can be located at the front side 204. A front quarter panel 204.4 of the vehicle 216 can also be located at the front side 204. Thus, the external microphones can be located at a front fascia/bumper 204.2 and/or a front quarter panel 204.4. Similarly, a rear fascia/bumper 206.2 and a rear quarter panel 206.4 may be located at rear side 206.

As may be understood from the above, the one or more external microphones mounted at possible positions 202 can cover different directions: front side 204; rear side 206; both sides (right side 208 and left side 210). It may also be possible to install external microphones on the roof of the car. However, receiving sounds from other directions, than the top (from the roof), may be more preferrable.

The sides of the vehicle as well as incoming direction of the external audio sound/signal may be understood in relation to a transverse axis 212 and a longitudinal axis 214 of the vehicle 216 or vehicle cabin 218. Specifically, the incoming direction "from the front" and "from the rear or the back" may be determined relative to the transverse axis 212 dividing the vehicle into two halves, from the front 204 to the rear 206. The incoming direction "from the right" and "from the left" may be determined relative to the longitudinal axis 214 dividing the vehicle into two halves, from the left side 210 to the right side 208

Thus, the one or more external microphones may be mounted at different vehicle parts. Each part may be configured to receive one or more microphones or microphone matrixes located at one or more positions (i.e., possible positions 202). Thus, each microphone or microphone matrix would be located at the exterior of the car body.

The one or more external microphones may transform external acoustic sounds to electrical signals, such as voltage. Thus, this voltage may be referred to as "external acoustic signal". The external acoustic signal may be routed to the audio processing unit of the car multimedia unit 108 having a processing entity 106. At the processing entity 106, the external acoustic signal may be transformed into a digital format. This digital format of the external acoustic signal, for which the signal processing methods (like applying the gain, filtering, applying reverberations etc.) may be applied, may be referred to as "a processed acoustic signal". In other words, transforming analogue, raw, external acoustic signal into a digital format may provide a processed acoustic signal. The processed acoustic signal may then be reproduced by the loudspeakers of the acoustic system, or may be further processed, e.g., mixed into currently played back audio signals (e.g. music) at an up-mixing unit. Thus, the played back music would additionally have the external acoustic sound at the background.

In some examples, mixing may be made based on the user's preferences, which may be set up in the car multimedia system in the HMI unit. This unit may also be used for defining the direction, where to get the external sounds from. This direction may be referred to as "an incoming direction". For example, a user can be prompted to select one of the following options: "Left" and/or "Right" and/or "Front" and/or "Rear". By selecting all these options, a user may listen sounds coming from all incoming directions (i.e., omni-directional listening). User can also specify how to play external sounds: (a) what shall be the level of the external acoustic signal compared to the played back (main) audio signal (e.g. 25% of the level of the main audio signal); or (b) direction in the cabin the external sound shall be played (a playback direction). For example, the following options can be offered to the user via the computer interface/HMI unit: "keep directions" (i.e. the external sounds will be played from those directions from which they are coming to the car), "mirror all directions" (front sounds will be played from the back and vice-versa; left sounds will be played from the right, and vice-versa), "mirror side directions" (front and back signals will be played from the same directions they are coming from, but the left and right sounds will be mirrored), "from the front" (all external sounds will be played form the front, i.e. "stage"), "from the back" (all external sounds will be played from the rear side), etc. Having stored all settings, HMI unit may interact with the sound control unit, which may transform the settings into correspondent control signals for the digital signal processing, DSP, modules in the audio processing unit. Part of these modules may be used for implementation of the up-mixing unit. As described above (main) audio signals may come from various signal sources available in the car, for example, radio, phone, CD, MP3, Bluetooth audio, USB-stick, and other sources. Using HMI, a user can turn on and off up-mixing, thus stopping mixing sounds from external microphones with the (main) audio signal (e.g., by setting the values of weights of the external acoustic signal to zero). Also, a user may have the possibility to make a user configuration for mixing: which sources shall be exempt from the mixing feature. For example, during the phone call some users may not want to keep signals from external microphones active. Thus, a user may be provided with a selection of one or more audio channels in the acoustic system of the car to be exempt from mixing with the external acoustic signal. Thus, the user configuration for mixing may comprise one or more audio channels, selected by a user form a list of channels, wherein the selected channel or channels may be exempt from mixing with the external acoustic signal, and wherein the selected channel or channels may provide an audio signal (phone, radio, music) that is different to the external acoustic signal. In a preferred implementation, a mobile phone, a personal assistant and/or a navigation channel may be exempt from mixing, while an entertainment, a music and/or a radio channel may be mixable.

The external microphones 102 can be either single microphones or microphone panels (microphone matrix, microphone array), consisting of multiple microphones. Microphone panels can significantly improve directivity selection (determining incoming directions). This may be further advantageous for tracking a source of the external acoustic sound with respect to the longitudinal axis of the vehicle. For example, if vehicle occupants want only specific external sounds to be played back in the vehicle cabin, but the rest to be filtered out, it can be implemented by using microphone panels combined with directional sound processing algorithms, to be used by the processing entity 106, at the audio processing unit. These algorithms are generally known in the art. Selection of the playback direction(s) of the external sounds to be played back can be implemented via HMI module.

Because the road may be curvy, the direction of the source of the selected external sound to be played back in the vehicle can vary (in respect to the longitudinal axis of the vehicle). This difficulty can be overcome by using source tracking algorithm, which can automatically detect the direction of the selected sound at each time of the moment (using, for example, frequency analysis, or machine learning-based algorithms) and provide the updated direction to the directional sound processing algorithm, thus, allowing it to track the desired sound.

In case of using machine learning algorithms, one implementation may include automatic detection of the approaching cars or other audible vehicles potentially visually hidden by the obstacles when the car/ vehicles shall turn from the small side street or from the yard to the main road, and informing driver about approaching cars/vehicles. Specifically, machine learning may improve the differentiation of the sound generated by the approaching cars/ vehicles from other components of the external acoustic sound. However, machine learning is not essential for said automatic detection of the approaching cars or other audible vehicles. The detection without machine learning may be simply implemented by the tracking of the external acoustic signal originated from the approaching cars or other audible vehicles. Additionally, irrelevant signals to track (noises that do not original from the approaching cars or other audible vehicles) may be filtered out by spatial filtering.

In some further examples, speed information may be used for informing the driver about the approaching car, e.g., only at very low speeds (e.g. below 20-30 km/h). This speed limit may be used for activation of the above algorithm for detection approaching cars. For example, a user can predefine this limit using the settings menu in the HMI unit. Thus, the method would track any approaching audible vehicles at or above the speed limit.

Algorithms for detecting the speed of the approaching cars or other audible vehicles can include spectral analysis of the received external acoustic signals (e.g., noises of the engine of the vehicle or vehicle tires). The higher the speed of the approaching car or other audible vehicle is, the higher would be the main tonality of the received noises. These noises are generally distinguishable on a spectrogram, which may be derived based on using series of short-time discrete Fourier transforms. In order to distinguish the acoustic sounds generated by the audible vehicle, the time variation of the intensity of the noises can be used. If being decreased, it may be interpreted that the approaching vehicles, which are emitting or generating these noises, are moving from or towards the vehicle where the acoustic system is installed. If the noises' intensity is increased over time (at discrete time steps), then the "approaching vehicles" are indeed approaching, and not false approaching or departing. Thus, the "noises" of the engine of the audible vehicle or vehicle tires can be reliably determined and associated with the approaching vehicles.

For determining the distance to the approaching cars or other audible vehicles, both options may be used: direct sound and/or reflected sound of the approaching cars or other vehicles (i.e. reflected from, e.g., a building located on the side of the street the vehicle having the acoustic system intends to turn to). The angle, from which the intensity of the external acoustic sound is maximal may give the angular position of the approaching vehicles in respect to the building, which reflects the sound. Using the direct sound and the reflected sound may enable estimation of the distance to the approaching vehicles. The precision of determining the direction of the reflected sound can depend on the number of the external microphones. The higher this number is, the more precise the determined direction of the reflected sound can be, and thus, the more precise the estimated distance to the approaching vehicles can be. When estimating and tracking the directions of the external acoustic sounds, various filtering methods can be used, for example, Kalman filtering, or a machine learning algorithms preliminary trained to determine the distance to the approaching vehicles for various uses: for small streets, busy streets, streets with or without buildings, wet or dry surfaces etc.

Safety-related sounds (notifications of safety risks due to approaching vehicles) may not be interesting to all vehicle occupants and only relevant to the driver of the vehicle where the acoustic system is installed. Therefore, driver-related (personalized) speakers, which may deliver the safety-related sounds only to the driver, but which may not disturb other occupants may be used. Such personalized speakers may be a left and a right head-rest speakers or a directional speaker. For example, by using the head-rest speakers (which may be in the vicinity of the driver's ears) the distance to other occupants will be rather high, as compared to the distance from the speakers to the driver's ears, so that the intensity of the safety-related sounds played back through the speakers would be significantly lower at the seating positions of passengers, as compared to the listening position for the driver (i.e., at designated positions for the left and right driver's ears). The seating positions designated for passengers may define the listening positions designated for the passengers (i.e., a center of a passenger seat may define a listening position for the passenger).

In some examples, the one or more loudspeakers may comprise a left and a right head-rest speakers (not shown in FIG. 2). The left head-rest speaker may be located at up to 15 cm distance from a designated positions for the left ear of the driver and the right head-rest speaker may be located at up to 15 cm distance from a designated positions for the right ear of the driver, allowing to reproduce the safety warning signal for the driver such that the safety warning sound tapers off in intensity below a threshold at the one or more listening positions designated for one or more passengers (not shown in FIG. 2). The one or more listening positions may be determined by a central position of the one or more passenger seats. In this example, the sound reproduced from the head-rest speaker may be advantageously blocked by the head-rest speaker in the direction of the listening positions designated for the passengers providing the tapering off in intensity.

In some examples, the one or more loudspeakers may comprise a directional speaker designated for the driver so that the safety warning sound tapers off in intensity below the threshold at the one or more listening positions designated for the one or more passengers due to directionality of the directional speaker. Thus, in this example, the sound reproduced from the directional speaker may taper off in intensity towards the listening positions designated for the passengers due to the directionality of the speaker.

Using microphones externally at the exterior of the vehicle, such as shown by possible positions 202, may face some problems. For example, due to a car moving, the incoming airflow may create unpleasant noises at the external microphones, which may eventually be played back by the loudspeakers. This effect can generally occur due to interaction of the wind with the membrane of the external microphone, causing its overload, thus transforming these overloads of the membrane to noise-like electrical signals. To overcome this problem, the external microphones can be covered by wind protection coverages (a cover component). The cover component may be made of a foam material, which may be transparent to acoustic waves in the audible range or hearing range, 20 Hz to 20,000 Hz. While being transparent to the audible range or hearing range, 20 Hz to 20,000 Hz, the cover component may prevent direct interaction of wind with the membrane of the external microphones, thus (almost) eliminating the noise caused by the airflow.

Thus, in some examples, the one or more external microphones may comprise a cover component comprising a foam rubber or a rubber-based material forming a porous cover component for protection against disturbances caused by wind inducing parasitic audible components in the external acoustical signals received from the one or more external microphones, wherein the cover component is transparent to the external acoustic sound having frequencies above 20 Hz. The one or more external microphones may be arranged in a matrix of microphones to be built in a vehicle part.

In some examples, the use of the external microphones can be activated electronically (e.g., upon a request from a user or automatically during installation of the acoustic system or the computer program product).

One effect provided by the method, the processing entity, the acoustic system, the computer program product and a use thereof may relate to the improving road/driving safety, especially when it may be necessary to listen to the sounds produced possibly by approaching vehicles, which can be obscured by the obstacles (e.g. billboards, big vehicles, etc.). Another effect relates to the fact that it is not necessary to open windows to listen to those sounds, when the external microphones are used to reproduce those sounds inside the vehicle cabin. As mentioned above, opening windows can be problematic in case of bad weather conditions, bad smells from the outside, dust etc. Moreover, opening windows during the driving typically increases the intensity of noises in the cabin caused by the wind gusts appearing due to the vehicle motion. These noise levels are especially high at high speed of the vehicle. Trials to compensate noises by increasing the volume of the played back sound may not be enough and may additionally result in unpleasant in-cabin experience caused by the high sound pressure level at the vehicle occupant's ears. In case of driving on the roads with the natural (rocks, trees, etc.) or artificial (buildings, road borders, tunnels, etc.) walls aside, opening windows on both sides lets the reflected sounds, which may be by far stronger than the wanted sounds for which the windows were opened, thus masking the desired sounds and only creating more noise in the cabin. Opening only one window on the very side, where the desired sounds occur at high speeds (70 km/h or above) does not fully solve the problem, because without opening the second window on the other side of the vehicle creates very unpleasant infra-low frequency noises, caused by air flow disruptions appearing because the input air flow and output air flow are using the same hole (window), thus, competing with each other and causing air pressure changes in the cabin of the vehicle with the frequencies 5-50 Hz resulting in very unpleasant audible noises and sometimes pain in the ears of the vehicle occupants.

The use of the method, the processing entity, the computer program product and the acoustic system may allow improving the driving safety in various situations, when the observation of the street is limited, while the noises from the approaching vehicles can steel be heard. For example, if the driver is going to turn to the main street from the yard or from the small side street, when the visual observation of the main street is limited by the other parked vehicles (e.g. trucks), or by the billboards, or trees, only the external sounds may signalize about the approaching vehicle with which the user's car may potentially collide, unless user will hear its noises.

Further effects may relate to that new immersion audio effects can be created. These new immersion effects enable car/vehicle occupants to be part of the environment (sounds of city, sounds of nature, etc.). These immersion effects can be available to vehicle occupants even at bad weather conditions.

Using microphone panels and the directional signal processing algorithms for external microphones can enable directional filtering of external sounds, which shall be played back in the cabin of the car. This directional filtering may improve immersion effects and/or tracking of a selected source of the external acoustic signal (e.g., approaching vehicles). Using direction tracking algorithms can be applied to the selected external sounds to automatically adapt the direction, from which the external sounds shall be grabbed.

Thus, the method, the acoustic system, the processing entity, the computer program product and the use thereof enable automatic detection of approaching vehicles (both, motor-based vehicles producing audible sounds, e.g., from the motor, and non-motor-based vehicles producing audible sounds, e.g., from tires) by using acoustical signals from the external microphones. This may improve road safety, especially in case of entering the main road from a small side road, when the optical view of the traffic is hidden by the obstacles. Additionally, the driving safety associated with approaching vehicles may be improved even at the bad weather conditions otherwise preventing the driver to open the windows to listen to the approaching vehicles, especially relevant in the situation, when a vehicle (car) is turning from a side road or from a yard to the main street.

Playing back the external sounds that are safety relevant may be implemented via driver dedicated speakers (e.g. via head-rest speakers or a directional speaker designated for the driver). These dedicated speakers can provide the safety relevant signal to the driver while avoiding disturbing passengers of the car.

As may be understood from the above, the method, the acoustic system, the processing entity, the computer program product and the use thereof may provide acoustic immersion effects for vehicle occupants by playing back nature sounds or city sounds. These sounds may be direction specific or direction agnostic. Direction specific sounds can be tracked so that the other external sounds (e.g. unpleasant noises or irrelevant sounds) are filtered out and not played back.

In some examples, additional immersion effects can be created by means of applying spatial sound processing algorithms applied to the external acoustic signals, e.g. adding reverberations, or passing the external sounds through a finite-impulse response filter, the coefficients of which may be taken from impulse responses of reference acoustic halls (e.g., the best concert halls in the world), or be derived from the head-related impulse responses corresponding specific directions in respect to the head of the human, and alike.

FIG. 3 schematically shows the method 300 according to one of a number of embodiments.

The method 300 is carried out at a processing entity of a vehicle cabin. The method 300 comprises steps S302, S304 and S306. Step S302 involves receiving, from one or more external microphones of an acoustic system located outside the vehicle cabin, an external acoustic signal associated with an external acoustic sound originating from outside the vehicle cabin. Step S304 involves generating a processed acoustic signal based on the external acoustic signal. Step S306 involves causing the processed acoustic signal to be reproduced inside the vehicle cabin by the acoustic system.

The processing entity configured to carry out the method steps S302, S304 and S306 may be implemented as described in the context of FIGs. 1 and 4: a processing entity 106; a processing entity 1000. The acoustic system comprising the processing entity may be implemented as described in the context of FIGs. 1 and 2: acoustic system 100; acoustic system 200. Thus, the features described in the context of FIGs. 1-4 are combinable/interchangeable.

FIG. 4 schematically shows the processing entity 1000 according to one of a number of embodiments.

More specifically, FIG. 4 shows a schematic architectural view of the entity 1000 which can carry out the above method steps (i.e., steps S302, S304, S306 in FIG. 3). The entity 1000 may be incorporated into any module (e.g., car multimedia unit 108 in FIG. 2). The entity 1000 may comprise an interface 1100 which is provided for transmitting data to or control analysis of data by other entities via a transmitter and for receiving data from other entities using a receiver. The interface may be referred to as input/output interface (I/O). The interface 1100 is especially qualified to receive the external acoustic signal (e.g., a voltage signal from the external microphones). The interface 1100 is further qualified to transmit data (e.g., processed acoustic signal; notifications) to another entity (e.g., a memory, an acoustic system 100; 200; an infotainment system). The entity 1000 furthermore comprises a processing unit 1200 which is responsible for the operation of the entity 1000. The processing unit 1200 comprises at least one computer processor and can carry out instructions stored on a memory 1300, wherein the memory may include a read-only memory, a random-access memory, a mass storage, a hard disk or the like. The memory can furthermore include suitable program code (computer readable instructions) to be executed by the processing unit 1200 so as to implement the above-described functionalities in which the entity is involved. The entity 1000 can be implemented in a single node or may be distributed over several nodes or entities in a cloud implementation. Each node or entity may comprise a computer processor, a computer memory, a computer interface or may be implemented on a cloud platform.

For examples, one processing unit 1200 may be a part of an up-mixing unit, as shown in FIG. 2. Another processing unit 1200 may be a part of the HMI unit. Another processing unit 1200 may be a part of the audio processing unit, and so on. All processing units 1200 may be communicatively coupled forming a (distributed) processing entity 1000. Each processing unit 1200 may receive and/or transmit data to/from a cloud or another entity. For example, a processing unit 1200 may be a part of a car multimedia unit 108 that can be communicatively coupled to a processing unit 1200 of a mobile phone. The computer program product may be stored in the memory 1300, which may be an electronic storage medium or a cloud.

The entity 1000 may receive data via the interface 1100. The received data may be user input.

In an aspect, the processing entity 1000 is used for acoustic system 100. The processing entity 1000 is adapted to carry out method steps S302, S304, S306. The processing entity 1000 comprises at least one computer processor.

Summarising, a method carried out at a processing entity of a vehicle cabin is provided. The method comprises the steps of: receiving, from one or more external microphones of an acoustic system located outside the vehicle cabin, an external acoustic signal associated with an external acoustic sound originating from outside the vehicle cabin; generating a processed acoustic signal based on the external acoustic signal; and causing the processed acoustic signal to be reproduced inside the vehicle cabin by the acoustic system. The method allows creating immersive audio effects in a vehicle cabin, immersing an occupant of a vehicle into a naturally sounding environment while allowing to have an isolated atmosphere inside the vehicle cabin from an atmosphere of the naturally sounding environment. Additionally, an acoustic system, a processing entity, and a computer program product for carrying out the steps of the method are provided, as well as their uses.

In view of the above, general conclusions can be drawn that may be summarised by the following examples.

In some examples, generating the processed acoustic signal may comprise determining an output condition for the reproduction of the processed acoustic signal inside the vehicle cabin, wherein the processed acoustic signal is to be reproduced based on the output condition.

In some examples, the output condition may comprise one or more playback directions determining from which direction the processed signal is caused to be reproduced in the vehicle cabin. In some examples, generating the processed acoustic signal may comprises: determining an incoming direction indicating from which direction the external acoustic signal comes relative to the vehicle cabin; and generating a directed acoustic signal, from a first playback direction that is the same as the determined direction, which when output by the acoustic system gives an impression as coming from the incoming direction, or alternatively, generating a directed acoustic signal from a second playback direction that is different to the determined direction, wherein the second playback direction is any one of: an opposite direction to the incoming direction to give an impression of mirroring the external acoustic sound, a front playback direction to give an impression of a stage effect or a rear playback direction with respect to the vehicle cabin.

In some examples, when multiple external acoustic signals are available, generating the processed acoustic signal may comprise determining multiple incoming directions, each indicating from which direction one of the multiple external acoustic signals comes relative to the vehicle cabin. The output condition may comprise one or more playback directions. The processing entity may cause each of the multiple external acoustic signals to be reproduced from a front playback direction or a rear playback direction with respect to the vehicle cabin. Additionally or alternatively, the processing entity may cause the multiple external acoustic signals to be reproduced omnidirectionally by multiple loudspeakers of the acoustic system. Additionally or alternatively, the processing entity may cause multiple external acoustic signals to be reproduced from multiple playback directions comprising a front or a rear playback direction allowing to keep or mirror front and rear incoming directions, and a side playback direction (left or right) allowing to mirror the incoming direction (left or right).

In some examples, generating the processed signal may comprise mixing the external acoustic signal with an audio signal generated from an audio source and played back by the acoustic system in the vehicle cabin.

In some examples, generating the processed signal may comprise changing a mixing ratio of the audio signal and the external acoustic signal mixed in the processed acoustic signal. When the mixing ratio is 100%, generating the processed signal comprises stopping an output of the audio signal, and replacing the audio signal by the processed acoustic signal. When the mixing ratio is 0%, generating the processed signal comprises stopping the mixing and (temporarily) replacing the external acoustic signal by the audio signal in the processed acoustic signal. When the mixing ratio is above 0% and less than 100%, generating the processed signal comprises reproducing the external acoustic signal and the audio signal j ointly with a weight of each signal according to the mixing ratio. In some examples, different mixing ratios may be applied to different loudspeaker channels and/or, mixing rations may vary in time depending on one or more acoustic conditions inside the vehicle cabin (e.g., noise level inside the vehicle cabin, in-cabin noise level).

In some examples, generating the processed signal may comprise determining a user input of a user of the acoustic system by which it is determined how the external acoustic sound should be processed and generating the processed acoustic signal based on the user input. Determining the user input may includes any one of: determining one or more playback directions; determining one or more mixing conditions to mix the audio signal with the external acoustic signal or to stop mixing; and/or determining a deactivation criterion for deactivating directional reproduction of the processed acoustic signal resulting in omnidirectional reproduction.

In some examples, generating the processed signal may comprise selecting a first geographical direction from which a first component of the (desired) external acoustic signal will be received by the one or more external microphones in order to filter out a second component of the (undesired) external acoustic signal, wherein the second component comes from other geographical directions than the first geographical direction; and tracking the first direction of the first component irrespective of a geographical orientation of the vehicle on a road surface. For example, the first component may be a desired sound, e.g., an approaching vehicle, a river, etc., while the second component may be all other components that are irrelevant for tracking, for listening pleasant sounds, for safety (e.g., undesired noise; incoming wind from the north; etc). The geographical directions may be north, south, west, east directions. The geographical orientation of the vehicle may be determined relative to these geographical directions, i.e., the north, south, west, east directions (e.g., by an angle or angles of the longitudinal/transverse axis of the vehicle with the axes defining geographic directions, i.e., north, south, west, east axes).

In some examples, generating the processed acoustic signal based on the external acoustic signal may comprises any one of:
(1) adding one or more surround effects comprising reverberations originated from the received external sound, wherein the reverberations comprise natural or artificially generated reverberations;
(2) providing a gain value for the external acoustic signal thereby controlling the volume of the reproduced acoustic signal;
(3) controlling the bass function of the external acoustic signal by setting amplification or attenuation of the low-frequency components of the external acoustic signal;
(4) controlling the midrange function of the external acoustic signal by setting amplification or attenuation of the middle-frequency components of the external acoustic signal;
(5) controlling the treble function of the external acoustic signal by setting amplification or attenuation of the low-frequency components of the external acoustic signal;
(6) automatically adjusting a sound pressure level of the external acoustic signal to be reproduced, based on a distance to a source of the external acoustic sound, or based on a level of internal noise inside the vehicle cabin, or based on a level of the played back audio signal to be mixed with the external acoustic sound;
   and/or
(7) filtering algorithms for decreasing or increasing the sound level at certain frequencies to make the external acoustic sound more pleasant for the listener; and/or
(8) determining and tracking an incoming direction of a selected external acoustic signal, selected from a plurality of received external acoustic signals, wherein the incoming direction is relative to a longitudinal axis of the vehicle, and wherein the tracking allows for filtering out the remaining external acoustic signals of the plurality of the external acoustic signals, wherein the remaining external acoustic signals come from incoming directions that are different to the incoming direction of the selected external acoustic signal. The level of level of the played back audio signal may refer to an amplifier gain in turn determining volume of the audio signal.

In some examples, the external acoustic signal may be received from the one or more external microphones at discrete sequential time periods for determining at least one of: the distance to an approaching vehicle and the speed of the approaching vehicle. Approaching vehicles may be determined by the processing entity from one or more sound components of the processed acoustic signal, sound intensity from the processed acoustic signal at the discrete sequential time periods, the distance and/or the speed. Further, a safety risk of approaching vehicles producing, at least in part, the external acoustic signal, may be determined by the processing entity. Then the processing entity may generate a notification of the safety risk.

In some examples, the notification may comprise a safety warning signal to be reproduced by the acoustic system.

In some examples, the one or more external microphones of the acoustic system may be located at one or more external sides of the vehicle comprising: a vehicle front side, a vehicle rear side, a vehicle left side, a vehicle right side, and/or a vehicle roof-top side. In some examples, the one or more external microphones of the acoustic system may be located at one or more vehicle parts comprising: a vehicle front and/or back fascia, a vehicle front and/or rear bumper, one or more vehicle mirrors, one or more vehicle quarter panels comprising any one of a front-left panel, a front-right panel, a rear-left panel and/or a rear-right panel, and/or a vehicle roof.

In some examples, the one or more loudspeakers of the acoustic system may comprise a left and a right head-rest speakers, wherein the left head-rest speaker may be located at up to 15 cm distance from a designated positions for the left ear of the driver and the right head-rest speaker may be located at up to 15 cm distance from a designated positions for the right ear of the driver, allowing to reproduce the safety warning signal for the driver such that the safety warning sound tapers off in intensity below a threshold at the one or more listening positions designated for one or more passengers, wherein the one or more listening positions may be determined by a central position of the one or more passenger seats. Alternatively, the one or more loudspeakers may comprise a directional speaker designated for the driver so that the safety warning sound tapers off in intensity below the threshold at the one or more listening positions designated for the one or more passengers due to directionality of the directional speaker.

In some examples, the one or more external microphones of the acoustic system may comprise a cover component comprising a foam rubber or a rubber-based material forming a porous cover component for protection against disturbances caused by wind inducing parasitic audible components in the external acoustical signals received from the one or more external microphones. The cover component may be made transparent (e.g., due to acoustic properties of the material) to the external acoustic sound having frequencies above 20 Hz. The one or more external microphones may be arranged in a matrix of microphones to be built in a vehicle part.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The methods may be performed by executing stored instructions with one or more logic devices (e.g., processors) in combination with one or more additional hardware elements, such as storage devices, memory, hardware network interfaces/antennae, switches, actuators, clock circuits, etc. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated (e.g., a processor does not exclude plural of processors). Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The following claims particularly point out subject matter from the above disclosure that is regarded as novel and non-obvious.

### Reference signs

100: an acoustic system for a vehicle;
102: external microphones;
104: loudspeakers;
106: a processing entity;
108: a car multimedia unit;
110: a vehicle;
112: a sound sources;
114: a human machine interaction, HMI, unit;
116: a sound control unit;
200: an acoustic system for a vehicle;
202: possible positions (locations) of external microphones;
204: a front side;
204.2: a front fascia/bumper;
204.4: a front quarter panel;
206: a rear side;
206.2: a rear fascia/bumper;
206.4: a rear quarter panel;
208: a right side;
210: a left side;
212: a transverse axis;
214: a longitudinal axis;
216: a vehicle;
218: a vehicle cabin;
300: a method;
S302: receiving, from one or more external microphones of an acoustic system located outside the vehicle cabin, an external acoustic signal associated with an external acoustic sound originating from outside the vehicle cabin;
S304: generating a processed acoustic signal based on the external acoustic signal;
S306: causing the processed acoustic signal to be reproduced inside the vehicle cabin by the acoustic system;
1000: a processing entity;
1100: I/O interface (computer interface; human-machine interaction interface);
1200: a processing unit (computer processor);
1300: a memory (electronic storage medium).

## Claims

1. A method (300) carried out at a processing entity (1000) of a vehicle cabin, comprising the steps of:
receiving (S302), from one or more external microphones of an acoustic system located outside the vehicle cabin, an external acoustic signal associated with an external acoustic sound originating from outside the vehicle cabin;
generating (S304) a processed acoustic signal based on the external acoustic signal; and causing (S306) the processed acoustic signal to be reproduced inside the vehicle cabin by the acoustic system.

2. The method of claim 1, wherein generating the processed acoustic signal comprises determining an output condition for the reproduction of the processed acoustic signal inside the vehicle cabin, wherein the processed acoustic signal is to be reproduced based on the output condition.

3. The method of claim 2, wherein the output condition comprises one or more playback directions determining from which direction the processed signal is caused to be reproduced in the vehicle cabin, and wherein generating the processed acoustic signal comprises: determining an incoming direction indicating from which direction the external acoustic signal comes relative to the vehicle cabin; and
- generating a directed acoustic signal, from a first playback direction that is the same as the determined direction, which when output by the acoustic system gives an impression as coming from the incoming direction, or
- generating a directed acoustic signal from a second playback direction that is different to the determined direction, wherein the second playback direction is any one of: an opposite direction to the incoming direction to give an impression of mirroring the external acoustic sound, a front playback direction to give an impression of a stage effect or a rear playback direction with respect to the vehicle cabin.

4. The method of claim 2, wherein, when multiple external acoustic signals are available, generating the processed acoustic signal comprises determining multiple incoming directions, each indicating from which direction one of the multiple external acoustic signals comes relative to the vehicle cabin, and wherein the output condition comprises one or more playback directions; and
- causing each of the multiple external acoustic signals to be reproduced from a front playback direction or a rear playback direction with respect to the vehicle cabin,
- causing the multiple external acoustic signals to be reproduced omnidirectionally by multiple loudspeakers of the acoustic system,
- or causing multiple external acoustic signals to be reproduced from multiple playback directions comprising a front or a rear playback direction allowing to keep or mirror front and rear incoming directions, and a side playback direction allowing to mirror the incoming direction.

5. The method of any one of claims 2 to 4, wherein generating the processed signal comprises mixing the external acoustic signal with an audio signal generated from an audio source and played back by the acoustic system in the vehicle cabin.

6. The method of claim 5,
wherein generating the processed signal comprises changing a mixing ratio of the audio signal and the external acoustic signal mixed in the processed acoustic signal,
when the mixing ratio is 100%, generating the processed signal comprises stopping an output of the audio signal, and replacing the audio signal by the processed acoustic signal,
when the mixing ratio is 0% generating the processed signal comprises stopping the mixing and temporarily replacing the external acoustic signal by the audio signal in the processed acoustic signal, and
when the mixing ratio is above 0% and less than 100%, generating the processed signal comprises reproducing the external acoustic signal and the audio signal jointly with a weight of each signal according to the mixing ratio,
wherein different mixing ratios may be applied to different loudspeaker channels and/or, mixing rations may vary in time depending on one or more acoustic conditions inside the vehicle cabin.

7. The method of any one of claims 3-6, wherein generating the processed signal comprises determining a user input of a user of the acoustic system by which it is determined how the external acoustic sound should be processed and generating the processed acoustic signal based on the user input;
optionally, wherein determining the user input includes any one of:
determining one or more playback directions;
determining one or more mixing conditions to mix the audio signal with the external acoustic signal or to stop mixing;
determining a deactivation criterion for deactivating directional reproduction of the processed acoustic signal resulting in omnidirectional reproduction; and/or
selecting a first geographical direction from which a first component of the external acoustic signal will be received by the one or more external microphones in order to filter out a second component of the external acoustic signal, wherein the second component comes from other geographical directions than the first geographical direction; and tracking the first direction of the first component irrespective of a geographical orientation of the vehicle on a road surface.

8. The method of any one of the preceding claims wherein generating (S304) the processed
acoustic signal based on the external acoustic signal comprises any one of: adding one or more surround effects comprising reverberations originated from the received
external sound, wherein the reverberations comprise natural or artificially generated reverberations;
providing a gain value for the external acoustic signal thereby controlling the volume of the reproduced acoustic signal;
controlling the bass function of the external acoustic signal by setting amplification or attenuation of the low-frequency components of the external acoustic signal;
controlling the midrange function of the external acoustic signal by setting amplification or attenuation of the middle-frequency components of the external acoustic signal;
controlling the treble function of the external acoustic signal by setting amplification or attenuation of the low-frequency components of the external acoustic signal; and/or
automatically adjusting a sound pressure level of the external acoustic signal to be reproduced, based on a distance to a source of the external acoustic sound, or based on a level of internal noise inside the vehicle cabin, or based on a level of the played back audio signal to be mixed with the external acoustic sound; and/or
determining and tracking an incoming direction of a selected external acoustic signal, selected from a plurality of received external acoustic signals, wherein the incoming direction is relative to a longitudinal axis of the vehicle, and wherein the tracking allows for filtering out the remaining external acoustic signals of the plurality of the external acoustic signals, wherein the remaining external acoustic signals come from incoming directions that are different to the incoming direction of the selected external acoustic signal.

9. The method of any one of claims 2-8, the method further comprising:
receiving the external acoustic signal from the one or more external microphones at discrete sequential time periods for determining at least one of: the distance to an approaching vehicle and the speed of the approaching vehicle,
determining the approaching vehicle from one or more sound components of the processed acoustic signal, sound intensity from the processed acoustic signal at the discrete sequential time periods, the distance and/or the speed,
determining a safety risk of approaching vehicles producing, at least in part, the external acoustic signal,
and generating a notification of the safety risk, wherein, optionally, the notification comprises a safety warning signal to be reproduced by the acoustic system.

10. A processing entity (1000) comprising at least one computer processor configured to carry out the method steps of anyone of the preceding claims.

11. A computer program product comprising computer readable instructions, stored on an electronic storage medium (1300), that, when executed on a processing entity (1000), cause the processing entity (1000) to carry out method steps according to any one of claims 1-9.

12. An acoustic system (100) for a vehicle, the acoustic system comprising one or more external microphones (102) and one or more loudspeakers (104) controlled by the processing entity (1000) of claim 10.

13. The acoustic system of claim 12,
wherein the one or more external microphones are located at one or more external sides of the vehicle comprising:
a vehicle front side, a vehicle rear side, a vehicle left side, a vehicle right side, and/or a vehicle roof-top side; and/or
wherein the one or more external microphones are located at one or more vehicle parts comprising:
a vehicle front and/or back fascia,
a vehicle front and/or rear bumper,
one or more vehicle mirrors,
one or more vehicle quarter panels comprising any one of a front-left panel, a front-right panel, a rear-left panel and/or a rear-right panel, and/or
a vehicle roof.

14. The acoustic system of any one of claims 12-13,
wherein the one or more loudspeakers comprise a left and a right head-rest speakers, wherein the left head-rest speaker is located at up to 15 cm distance from a designated positions for the left ear of the driver and the right head-rest speaker is located at up to 15 cm distance from a designated positions for the right ear of the driver, allowing to reproduce the safety warning signal for the driver such that the safety warning sound tapers off in intensity below a threshold at the one or more listening positions designated for one or more passengers, wherein the one or more listening positions are determined by a central position of the one or more passenger seats; or
wherein the one or more loudspeakers comprise a directional speaker designated for the driver so that the safety warning sound tapers off in intensity below the threshold at the one or more listening positions designated for the one or more passengers due to directionality of the directional speaker.

15. The acoustic system of any one of claims 12-14,
wherein the one or more external microphones comprise a cover component comprising a foam rubber or a rubber based material forming a porous cover component for protection against disturbances caused by wind inducing parasitic audible components in the external acoustical signals received from the one or more external microphones, wherein the cover component is transparent to the external acoustic sound having frequencies above 20 Hz, and wherein the one or more external microphones are arranged in a matrix of microphones to be built in a vehicle part.

16. Using the method of any one of claims 1-9, the processing entity of claim 10, the computer program product of claims 11 and/or the acoustic system of any one of claims 12-15 for creating immersive audio effects in a vehicle cabin, immersing an occupant of a vehicle into a naturally sounding environment while allowing to have an isolated atmosphere inside the vehicle cabin from an atmosphere of the naturally sounding environment.

17. A vehicle comprising the acoustic system of any one of claims 12-15.
